# EUROPEAN PATENT SPECIFICATION

(11) **EP 4 105 602 B1**
(45) Date of publication and mention of the grant of the patent: **26.02.2025**
(21) Application number: 21182505.4
(22) Date of filing: 29.06.2021
(51) Int. Cl.: G01C 21/20, G01C 21/04

(54) **METHOD AND DEVICE FOR NAVIGATION PLANNING**
VERFAHREN UND VORRICHTUNG ZUR NAVIGATIONSPLANUNG
PROCÉDÉ ET DISPOSITIF DE PLANIFICATION DE NAVIGATION

(30) Priority: 15.06.2021 JP 2021099670
(43) Date of publication of application: 21.12.2022
(73) Proprietor: FURUNO ELECTRIC CO., LTD., Nishinomiya-City, Hyogo 662-8580 (JP)
(72) Inventor: OKUDA, Masato, Nishinomiya-City, 662-8580 (JP); ISHIHARA, Shinji, Nishinomiya-City, 662-8580 (JP)
(74) Representative: Müller Hoffmann & Partner

(56) References cited:
- WO-A1-2016/020878
- JP-A- 2018 150 024

## Description

### TECHNICAL FIELD

An example embodiment of the present invention generally relates to a navigation planning device for planning a navigation route.

### BACKGROUND OF THE INVENTION

An Electronic Chart Display and Information System (ECDIS) displays navigation route information for one or more vessels, where the one or more vessels are navigating through a water body, for example a river, or a sea or the like. The ECDIS displays a chart of desired area on a display by performing software processing of electronic chart data. The ECDIS may comprise a touch sensitive display screen. Therefore, the navigation route can be set on the chart displayed on the touch display screen by touching desired locations on the chart or by moving a cursor. The navigation route is established by determining a navigation starting point (a starting point) and a navigation destination point (a destination point) of the vessel, and in an interval, determining one or more points called "waypoint" through which the vessel should pass. These waypoints must be accurately located to not cause obstruction to the vessel on the navigation route. When determining position of the waypoints, it is to be ensured that there are no obstructions such as a buoy, a lighthouse or the like near the navigation route of the vessel. Therefore, when there are obstructions (also referred as a target) such as the lighthouse or the buoy near the navigation route, the position of the waypoint is set based on a distance from the target and a bearing thereby ensuring that the navigation route is safe from dangerous areas such as land and shallow water.

In the conventional systems, when measuring the distance and the direction of the waypoint to be set from the target, it is necessary to set the navigation route while confirming the distance and the position every time the position of the waypoint is changed by using a separate tool. The tool obtains the distance and the direction separately from input of the position of the waypoint. For example, in JP-PA-2018-150024, the navigation route planning system generates a route line by connecting sequentially selected previous waypoints to a current waypoint being entered. Further, in order to set the next waypoint from a latest set waypoint i.e., the current waypoint, a guideline value is displayed at the position of the latest waypoint along with azimuth. Additionally, since the conventional navigation apparatus displays only the guideline value for finding the next waypoint, it is not possible to dynamically change positions of the waypoint and obtain distance of the target along with the azimuth in real time. Further, there is no means in the prior art for a user to operate a line indicating the azimuth and a scale indicating the distance of the target, and to superimpose the line on the target object, which is troublesome.

Therefore, there is a need for a navigation device capable of determining position of a potential waypoint such that the position of the potential waypoint is within a prescribed angle and distance from the target thereby efficiently setting a safe navigation route for the vessel.

WO 2016/ 020878 A1 discloses how to edit a navigational route, in order to automatically generate a navigational route having the "least-cost" path between a starting node and an ending (goal) node. That is, for example, the shortest distance path is determined.

### SUMMARY OF THE INVENTION

Those problems arising according to the above are solved by the subject-matter of the independent claims.

Example embodiments are defined in the dependent claims.

Further embodiments, and features will become apparent by reference to the drawings and the following detailed description.

### EFFECT(S) OF THE INVENTION

In various embodiments, a device, and a method for planning a navigation route for a vessel or an aircraft is provided. The navigation planning device enables efficient determination of waypoints that are located at a prescribed angle and distance of interest from a target in a navigation route thereby ensuring safe navigation for the vessel or the aircraft.

### BRIEF DESCRIPTION OF THE DRAWINGS

The present invention is illustrated by way of example and not by way of limitation in the figures of the accompanying drawings, in which the like reference numerals indicate like elements and in which:
FIG. 1A is a schematic diagram that exemplarily illustrates working environment of a navigation planning device, in accordance with an example embodiment;
FIG. 1B illustrates a block diagram of the navigation planning device, exemplarily illustrated in FIG. 1A, in accordance with an example embodiment;
FIG. 2A illustrates a user interface, where the position of a potential waypoint is changed, in accordance with an example embodiment;
FIG. 2B illustrates a user interface displaying an activation signal when the position of the potential waypoint is determined, in accordance with an example embodiment;
FIG. 3A illustrates a user interface displaying positional information of plurality of targets, in accordance with an example not falling under the claimed invention;
FIG. 3B illustrates a user interface displaying the activation signal along with the positional information of plurality of targets, in accordance with an example not falling under the claimed invention;
FIG. 4A illustrates a user interface displaying positional information of the potential waypoint, in accordance with an example not falling under the claimed invention;
FIG. 4B illustrates a user interface displaying the activation signal along with the positional information of the potential waypoint, in accordance with an example not falling under the claimed invention ;
FIG. 5A illustrates a user interface displaying plurality of dots arranged to form a first circle, in accordance with an example not falling under the claimed invention;
FIG. 5B illustrates a user interface displaying the activation signal along with the plurality of dots arranged to form a first circle, in accordance with an example not falling under the claimed invention;
FIG. 6 is a flowchart that illustrates steps of a navigation planning method executed by the navigation planning device, in accordance with an example not falling under the claimed invention.
FIG. 7 is a flowchart that illustrates steps for determining position of potential waypoint executed by a position specifying unit, in accordance with an example not falling under the claimed invention.

### DETAILED DESCRIPTION OF THE INVENTION

In the following description, for purposes of explanation, numerous specific details are set forth in order to provide a thorough understanding of the present invention. It will be apparent, however, to one skilled in the art that the present invention may be practiced without these specific details. In other instances, systems and methods are shown in block diagram form only in order to avoid obscuring the present invention.

Some embodiments of the present invention will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this invention will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Further, the terms "processor", "controller", "processing part", and "processing circuitry" and similar terms may be used interchangeably to refer to the processor capable of processing information in accordance with embodiments of the present invention. Further, the terms "electronic equipment", "electronic devices" and "devices" are used interchangeably to refer to electronic equipment monitored by the system in accordance with embodiments of the present invention. Thus, use of any such terms should not be taken to limit scope of embodiments of the present invention

The embodiments are described herein for illustrative purposes and are subject to many variations. Any heading utilized within this description is for convenience only and has no legal or limiting effect.

As used in this specification and claims, the terms "for example" "for instance" and "such as", and the verbs "comprising," "having," "including" and their other verb forms, when used in conjunction with a listing of one or more components or other items, are each to be construed as open ended, meaning that that the listing is not to be considered as excluding other, additional components or items. Other terms are to be construed using their broadest reasonable meaning unless they are used in a context that requires a different interpretation.

One of the objectives of the present invention is to determine a safe route for a vessel or an aircraft during navigation. The navigation route should be set such that the vessel does not get stuck in land or in shallow waters present in water body. The water body may comprise a sea, an ocean, a river, or the like. The safe navigation route ensures a vessel on the navigation route avoids shallow waters and land in the water body. To ensure that the vessel navigating the water body avoids shallow waters, mud, land or the like, it is important to set navigation route that is at a certain distance away from the plurality of targets. Further, in case the vessel is required to reach shore, it is important to set a waypoint on the navigation route that is perpendicular to the plurality of targets to ensure that bearing of the ship is at 90 degrees thereby enabling the ship to reach the shore efficiently. The navigation route is determined by a navigation planning device by determining position of a potential waypoint on an electronic chart by referring to a target such as a lighthouse or a buoy near the route. The electronic chart comprises positional information related to the target. Further, position of the potential waypoint is set on the basis of a distance from the target and the bearing. By doing so, it is possible to confirm that the route is safe and directed to a destination away from dangerous areas such as land and shallow water. The potential waypoint is subsequently added to the navigation route comprising a plurality of waypoints. The waypoints may not necessarily be route origination and route destination points but may be any passing point or any arbitrary point that is used for setting up the navigation route.

Further, the navigation planning device is configured to receive a potential waypoint and determine position of the potential waypoint as a next waypoint following a latest waypoint. The potential waypoint is movable on the electronic chart. A position of the potential waypoint is selected tentatively. The tentative position of the potential waypoint can be moved or adjusted in order to optimize the navigation route by simple drag and drop or by moving back and forth on the display screen. Further, the position of the potential waypoint is set with reference to the plurality of targets such that the potential waypoint is at a prescribed angle and distance from the target that is nearby the potential waypoint. The prescribed angle is an angle formed between a first bar that connects the latest waypoint with the potential waypoint and a second bar that connects the potential waypoint with the target. When the position of the potential waypoint is changed, the first bar and the second bar is also configured to move along. Further, when the potential waypoint is determined, the navigation device is configured to output an activating signal such that the visual display of the first bar and the second bar is changed to denote that the potential waypoint is at the prescribed angle and distance from the target. Further, the navigation device provides a waypoint fix signal upon receiving the activating signal so that the potential waypoint is added to the navigation route of the vessel.

In this way, the navigation planning device allows accurate determination of the waypoints and consequently enables determining an optimized navigation route that is safe for navigation.

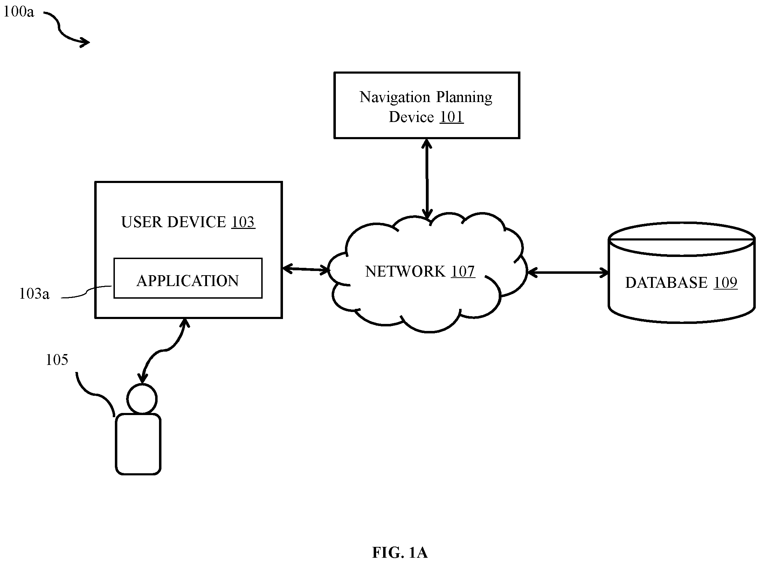

FIG. 1A is a schematic diagram that exemplarily illustrates working environment 100a of a navigation planning device 101, in accordance with an example embodiment. In an example embodiment, the navigation planning device 101 is installed at a vessel navigating in a water body. In an example embodiment, the navigation planning device 101 may be installed on an aircraft. The navigation planning device 101 installed on the vessel may be used to determine a safe navigation route in the water body. The navigation planning device 101 may obtain inputs from a user 105, where the inputs may comprise position information of a plurality of waypoints including a latest waypoint and position information of a potential waypoint (not shown in Figure) in between the latest waypoint point and a target. The position information may comprise position data such as longitude or latitude, direction data, or GPS coordinates, distance from latest waypoint, distance from the target, or the like. The navigation planning device 101 is communicatively coupled with a user device 103, and a database 109, via a network 107.

The user device 103 comprises an application 103a installed in it, where the application 103a displays different information associated with navigation for the user 105 operating the user device 103. The user device 103 may be any user accessible device such as a smartphone, a portable computer, a display unit, or the like. In an example embodiment, the user device 103 may include Electronic Chart Display and Information System (ECDIS). The user device 103 uses the application 103a to display different navigation information such as sea maps, tidal currents of the sea, or the like on a display screen of the user device 103. In an example embodiment, the user device 103 may be configured with a touch screen display.

Further, the database 109 may store updated navigation maps, latest information about the weather forecast, information about the tidal currents, nautical charts that may be used by the vessel for navigating in the water body and determining a safe navigation route. The database 109 may further comprise dangerous locations in the water body such as location of a whirlpool, shallow waters, mud, land or the like. The database 109 may comprise navigation data such as information on plurality of targets such as a buoy, a light house or the like, information related to salinity, water temperature and air temperature, atmospheric pressure, and wind (speed, gusts, and direction), geographical location in terms of longitude and latitude of the vessel, or the like. The database 109 may also comprise updated navigation maps, latest information about the weather forecast, or the like that may be used by an aircraft.

In alternate embodiments, the database 109 may be embodied as a map database and may represent a compiled navigation database that may be used in or with the user device 103 to provide navigation and/or map-related functions to the user 105. In such a case, the database 109 may be downloaded or stored on the user device 103.

The network 107 may comprise suitable logic, circuitry, and interfaces that may be configured to provide a plurality of network ports and a plurality of communication channels for transmission and reception of data, such as selected positions of navigation start point S, navigation destination point D, plurality of waypoints (103b, 103c, ..., 103f) or the like. Each network port may correspond to a virtual address (or a physical machine address) for transmission and reception of the communication data. For example, the virtual address may be an Internet Protocol Version 4 (IPv4) (or an IPv6 address) and the physical address may be a Media Access Control (MAC) address. The network 107 may be associated with an application layer for implementation of communication protocols based on one or more communication requests from at least one of the one or more communication devices. The communication data may be transmitted or received, via the communication protocols. Examples of such wired and wireless communication protocols may include, but are not limited to, Transmission Control Protocol and Internet Protocol (TCP/IP), User Datagram Protocol (UDP), Hypertext Transfer Protocol (HTTP), File Transfer Protocol (FTP), ZigBee, EDGE, infrared (IR), IEEE 802.11, 802.16, cellular communication protocols, and/or Bluetooth (BT) communication protocols.

Examples of the network 107 may include, but is not limited to a wireless channel, a wired channel, a combination of wireless and wired channel thereof. The wireless or wired channel may be associated with a network standard which may be defined by one of a Local Area Network (LAN), a Personal Area Network (PAN), a Wireless Local Area Network (WLAN), a Wireless Sensor Network (WSN), Wireless Area Network (WAN), Wireless Wide Area Network (WWAN), a Long Term Evolution (LTE) network, a plain old telephone service (POTS), and a Metropolitan Area Network (MAN). Additionally, the wired channel may be selected on the basis of bandwidth criteria. For example, an optical fiber channel may be used for a high bandwidth communication. Further, a coaxial cable-based or Ethernet-based communication channel may be used for moderate bandwidth communication.

The invention is based on the recognition that in order to determine the navigation route optimized for safety, the potential waypoints must be located at a prescribed angle and desired distance from the target so that the shallow waters and land are avoided during the navigation route.

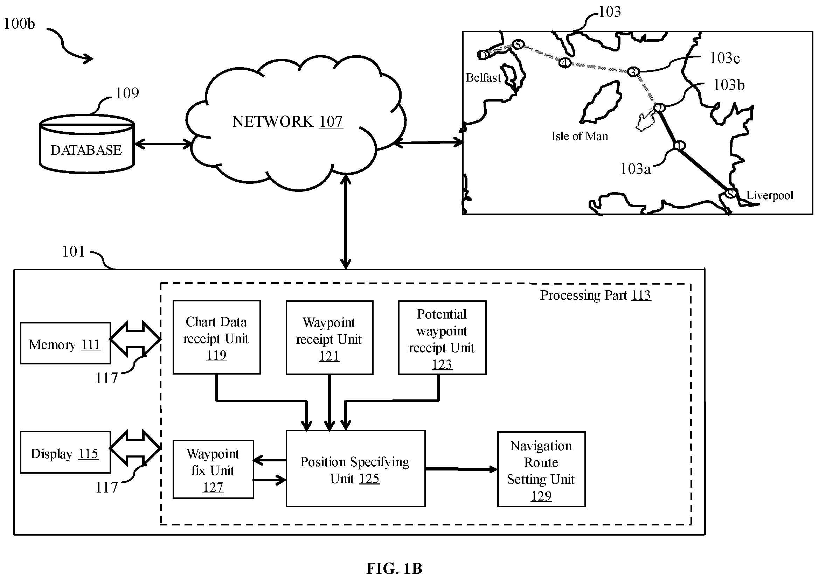

To that end, the navigation planning device 101 enables the user 105 to select the potential waypoint. The potential waypoint corresponds to potential positions, which can be adjusted or deleted based on the requirement in real time to determine an optimized navigation route. Thus, the navigation planning device 101 enables the user 105 to adjust the location of the potential waypoint dynamically so that the potential waypoint is situated at a desired distance and angle from the target in order to determine the optimized navigation route. The location of the potential waypoint is adjusted by the user 105 on a user interface of the user device 103 of the navigation planning device 101. Alternatively, the locations may be adjusted by the user 105 remotely by using the user device 103 which is connected to the navigation planning device 101 via the network 107. For example, in the user device 103 that is configured with the touch screen display displaying the map, the position of the potential waypoint can be adjusted by dragging and dropping position of the potential waypoint on the map by using the touch screen display. A detailed analysis of the proposed navigation planning device 101 is described below with respect to FIG. 1B.

FIG. 1B illustrates a block diagram 100b of the navigation planning device 101, exemplarily illustrated in FIG. 1A, in accordance with an example embodiment. The navigation planning device 101 includes a processing part 113 configured to execute stored instructions, as well as a memory 111 that stores instructions that are executable by the processing part 113. The memory 111 is further configured to store a chart data for navigation, where the chart data may comprise map of the water body, position information related to the plurality of targets, and other navigational information. The memory 111 can include random access memory (RAM), read only memory (ROM), flash memory, or any other suitable memory systems. The processing part 113 is connected through a bus 117 to the memory 111.

Further, the navigation planning device 101 comprises a display 115, where the display 115 is configured to display chart information and position information of one or a plurality of targets. The display 115 is one or more of a touch screen display, and an Electronic Chart Display Information System (ECDIS) configured to receive at least one of touch based input and a mouse based input. The chart information may be present in the user device 103 and comprises a navigation start point S, a destination point D, a plurality of waypoints (103b, 103c, ..., 103f) having a latest waypoint (103c), and a potential waypoint (not shown in Figure). The display 115 is further configured to receive the plurality of waypoints (103b, 103c, ..., 103f) between the navigation start point S and the navigation destination point D. Further, the display 115 is configured to provide data obtained from the user 105 such as navigation start point, navigation destination point, plurality of waypoints (103b, 103c, ..., 103f), latest waypoint (103c), potential waypoint, or the like to the processing part 113 via the bus 117.

The processing part 113 includes a chart data receipt unit 119, a waypoint receipt unit 121, a potential waypoint receipt unit 123, a position specifying unit 125, a waypoint fix unit 127, and a navigation route setting unit 129 that outputs a navigation route. Further, different components of the processing part 113 are connected to the user device 103, where the application 103a may be run at the user device 103 to display sea map on the display screen of the user device 103. Further, the screen of the user device 103 may be the touch screen enabled to obtain inputs from the user 103.

The processing part 113 is configured to use the chart data receipt unit 119, where the chart data receipt unit 119 is configured to receive a chart data. The chart data includes position information of one or a plurality of targets. The plurality of targets may be a landmark object such as a light house, buoy, and the like. The processing part 113 is further configured to use the waypoint receipt unit 121 to receive the plurality of waypoints (103b, 103c, ..., 103f) including the latest waypoint (103c) for a navigation route of a movable body such as a vessel or an aircraft. The locations of the navigation start point S, the plurality of waypoints (103b, 103c, ..., 103f), and the navigation destination point D may be specified, by the user 105, on the map displayed on the touch screen display panel of the display 115 by directly touching at the specific locations or moving a cursor on the display panel, or by inputting numerical data on the map. In another embodiment, the user 105 may use the user device 103 to remotely specify locations of the navigation start point S, the plurality of waypoints (103b, 103c, ..., 103f), and the navigation destination point D on the map displayed on the touch screen of the user device 103. The plurality of waypoints (103b, 103c, ..., 103f) comprises one or more previously selected waypoints, and the latest waypoint 103c.

The processing part 113 is configured to use the potential waypoint receipt unit 123 to receive potential waypoints. The potential waypoint is provided by the user 105 through the user device 103 by touching a region of interest on the map displayed on the touch screen panel. The potential waypoint is movable on the map. The potential waypoint receipt unit 123 is configured to receive position information of the potential waypoint when the potential waypoint is being moved.

Further, in order to determine the safest navigation route, a positional relationship between the latest waypoint 103c, the plurality of targets (not shown in figure) and the potential waypoint is required (not shown in figure).

To that end, the processing part 113 is configured to use the position specifying unit 125, where the position specifying unit 125 is configured to determine a position of the potential waypoint as a next waypoint following the latest waypoint 103c. The position specifying unit 125 receives a current position data of the potential waypoint from the potential waypoint receipt unit 123, position information of the latest waypoint 103c from the waypoint receipt unit 121. Further, the position specifying unit 125 receives position information of the plurality of targets located within a predetermined distance from the potential waypoint from the chart data receipt unit 119. Subsequently, the position specifying unit 125 calculates a distance between the potential waypoint and each of the plurality of targets and calculates an angle between the latest waypoint 103c, the potential waypoint, and the plurality of targets. When the distance is a minimum distance and the angle is equal to a threshold value, the position specifying unit 125 provides an activation signal. The waypoint fix unit 127 receives the activation signal and is configured to generate a waypoint fix signal upon receiving the activation signal. The waypoint fix signal is transmitted to the position specifying unit 125 where the position specifying unit 125 is further configured to transmit the waypoint fix signal to the navigation route setting unit 129.

Further, the display unit 115 is communicatively coupled with the navigation route setting unit 129, where the route setting unit 129 is configured to determine the navigation route by connecting the navigation start point S, one or more waypoints of the plurality of waypoints (103b, 103c, ..., 103f), and the navigation destination point D. The route setting unit 129 uses the waypoint fix signal from the waypoint fix unit 127 to determine which potential waypoint should be connected with the latest waypoint of the plurality of waypoints (103b, 103c, ..., 103f) in order to determine the safest navigation route. The navigation route optimized for safety is displayed on the display 115. In another embodiment, the optimized navigation route may be displayed on the user device 103. In some embodiments, the route setting unit 129 communicates directly with the user device 103 such as the ECDIS through the network 107 to determine the optimized navigation route.

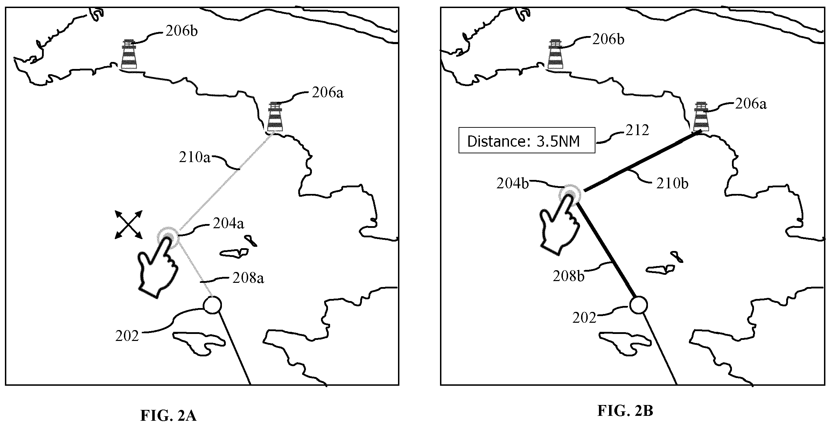

The user 105 inputs position data associated with the potential waypoint through the display 115 of the navigation planning device 101. In another embodiment, the user 105 may input the position data associated with the potential waypoint through the user device 103. In both the cases, the user interface shown to the user 105 to receive the position data remains same. A detailed explanation associated with a user interface used by the user 105 to input different position data of the potential waypoint associated with the navigation route is explained below with respect to FIG. 2A-2B. FIG 2A-2B explained below provides a detailed description of the user interface used to input position data of the potential waypoint either through the display 129 or the user device 103.

FIG. 2A illustrates a user interface, where the position of a potential waypoint 204a is changed, in accordance with an example embodiment. The user interface comprises a latest waypoint 202 that is part of the plurality of waypoints (103b, 103c, ..., 103f), the potential waypoint 204a, and a plurality of targets 206a, 206b. The latest waypoint 204a corresponds to the latest waypoint 103c in FIG.1B. The user 105 may input the potential waypoint 204a and move the position of the potential waypoint 204a by touching at specific locations, moving the cursor on the display panel, or by inputting numerical data in the navigation map displayed on the user interface. The user interface further comprises a first bar 208a and a second bar 210a. The first bar 208a is a line connecting the latest waypoint 202 with the potential waypoint 204a. The second bar 210a is the line connecting the potential waypoint with the target 206a. When the potential waypoint 204a is moved, the first bar 208a and the second bar 210a moves along with the potential waypoint 204a. The first bar 208a and the second bar forms an angle that is calculated by the position specifying unit 125. The position specifying unit 125 determines whether the angle formed by the first bar 208a and the second bar 210a is equal to a preset value of 90 degrees. Further, the position specifying unit 125 calculates distance of the potential waypoint 204a from the target 206a. The position specifying unit 125 outputs an activating signal when the position of the potential waypoint 204a is located such that the angle between the first bar 208a and the second bar 210a is equal to the preset value as shown in FIG 2B.

FIG.2B illustrates a user interface displaying an activating signal when the position of the potential waypoint 204b is determined, in accordance with an example embodiment. When the angle between the first bar 208a and the second bar 210a is equal to the preset value of 90 degrees, the position specifying unit 125 outputs the activating signal. The activating signal is provided to the first bar 208a and the second bar 210a. The display 115 changes the display of the first bar from 208a to 208b and the second bar from 210a to 210b based on the activating signal. The display 115 changes one or more of color, contrast, thickness or aspect of the first bar (208) and the second bar (210) based on the activation signal as shown in 208b and 210b. Further, the position specifying unit 125 calculates the distance of the potential waypoint 204b from the target 206a. The distance is calculated in nautical miles (NM). The calculated distance is displayed by the display 115 at 212, which is in an area near the potential waypoint 204b. The target 206a is selected from the plurality of targets 206a, 206b as shown in FIG. 2A-2B.

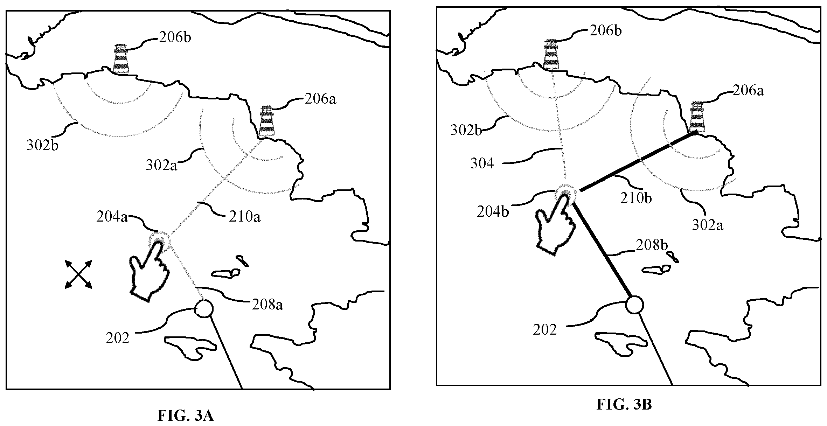

FIG. 3A illustrates a user interface displaying positional information of plurality of targets 206a, 206b, in accordance with an example not falling under the claimed invention. The positional information of the plurality of targets 206a, 206b further comprises a plurality of concentric half circles 302a, 302b arranged around the plurality of targets 206b, 206a respectively to indicate distance from the plurality of targets 206b, 206a. For example, the distance may be incremented by 1NM at each half circle of the plurality of concentric half circles 302a, 302b. Therefore, the user 105 is aware of the approximate distance from the plurality of targets 206a, 206b based on the number of concentric half circles arranged around the plurality of targets 206a, 206b. When the potential waypoint 204a is selected by the user 105, the processing part 113 searches for the plurality of targets 206a, 206b that are present near the position of the potential waypoint 204a. The processing part 113 calculates the distance of the plurality of targets 206a, 206b from the potential waypoint 204a along with the angle to provide the activating signal as shown in FIG. 3B.

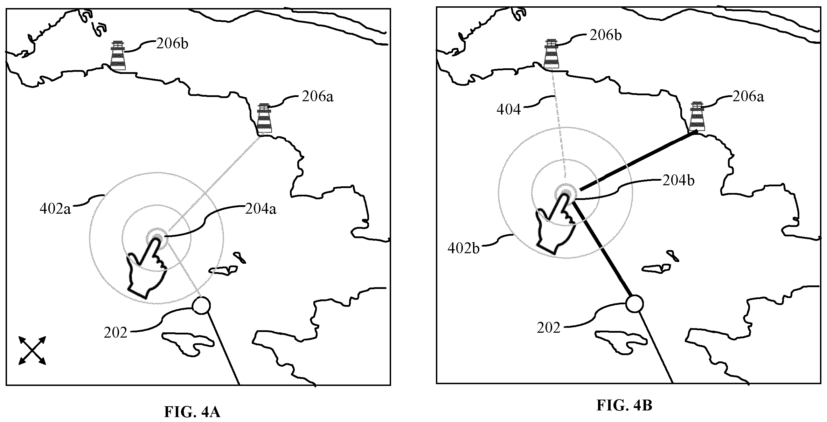

FIG. 3B illustrates a user interface displaying the activation signal along with the positional information of plurality of targets 206a, 206b in accordance with an example not falling under the claimed invention. The user interface comprises the latest waypoint 202, the potential waypoint 204b, and the plurality of targets 206a, 206b. When the user 105 selects the position of the potential waypoint 204b, the position specifying unit 125 of the processing part 113 is configured to search from the chart data, the plurality of targets 206a, 206b where the plurality of targets 206a, 206b includes one or more of a stationery landmark object and a moving object located within a predetermined distance from the potential waypoint 204b. The stationery landmark object may include fixed objects such as a light house. The moving object may include objects such as a buoy that move on the water body. The position specifying unit 125 calculates the distance of the potential waypoint 204b from each of the plurality of targets 206a, 206b along with the angle. A dotted line 304 connecting the potential waypoint 204b with the target 206b is displayed by the display 115 indicating that the position specifying unit 125 takes into consideration, the distance and angle of the potential waypoint 204b from the target 206b in addition to calculating the distance and the angle of the potential waypoint 204b from the target 206a. Based on the calculation, the position specifying unit 125 selects the target from the plurality of targets 206a, 206b such that the distance of the potential waypoint 204b from the plurality of targets 206a, 206b is minimum, in addition to the angle of the potential waypoint 204b from the plurality of targets 206a, 206b being equal to the threshold value. The target 206a that satisfies both these criteria is selected from the plurality of targets 206a, 206b. Further, the position specifying unit 125 outputs the activating signal selecting the target at which the calculated angle is equal to a threshold value and the calculated distance is at minimum. The activating signal is provided to the first bar 208a and the second bar 210a. The display 115 changes the display of the first bar from 208a to 208b and the second bar from 210a to 210b based on the activating signal. The display 115 changes one or more of color, contrast, thickness or aspect of the first bar (208) and the second bar (210) based on the activation signal as shown in 208b and 210b respectively. In addition to calculating the distance from the plurality of targets 206a, 206b, the navigation planning device 101 also calculates the distance from the potential waypoint 204a, 204b based on the positional information as explained in FIG. 4A-4B.

FIG. 4A illustrates a user interface displaying a positional information of the potential waypoint 204a, in accordance with an example not falling under the claimed invention. The user interface comprises the latest waypoint 202, the potential waypoint 204a, and the plurality of targets 206a, 206b. The positional information of the potential waypoint 204a comprises a plurality of concentric full circles 402a arranged around the potential waypoint 204a to indicate distance from the potential waypoint 204a. For example, the distance may be incremented by 1NM at each circle of the plurality of concentric full circles 402a. Therefore, the user 105 is aware of the approximate distance from the potential waypoint 204a based on the number of concentric circles arranged around the potential waypoint 204a. The processing part 113 calculates the distance of the plurality of targets 206a, 206b from the potential waypoint 204a along with the angle to provide the activating signal as shown in FIG. 4B.

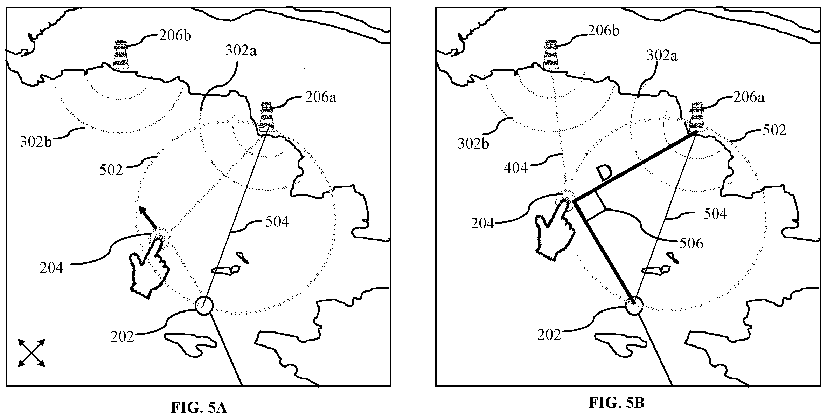

FIG. 4B illustrates a user interface displaying the activation signal along with the positional information of a potential waypoint 204b, in accordance with an example not falling under the claimed invention. When the user 105 selects the position of the potential waypoint 204b, the position specifying unit 125 of the processing part 113 displays a plurality of concentric circles 402b around the potential waypoint 20b. Further, a dotted line 404 connecting the potential waypoint 204b with the target 206b is displayed by the display 115 indicating that the position specifying unit 125 takes into consideration, the distance and angle of the potential waypoint 204b from the target 206b in addition to calculating the distance and the angle of the potential waypoint 204b from the target 206a. The calculation of the angle by the position specifying unit 125 is explained in FIG.5A-5B below.

FIG. 5A illustrates a user interface displaying a plurality of dots arranged to form a first circle 502, in accordance with an example not falling under the claimed invention. The user interface further comprises the latest waypoint 202, the potential waypoint 204, the plurality of targets 206a, 206b, and a line 504. The line 504 corresponds to a diameter of the first circle 502. When the user 105 inputs the potential waypoint 204, the position specifying unit 125 is configured to calculate an intersection position of two circles, where the first circle 502 is having the diameter of the line 504 connecting the target 206a and the latest waypoint 202, and second circle is the plurality of half circles 302a, 302b having a radius of a given distance around the target 206a. The position specifying unit 125 is further configured to output the calculated intersection position to indicate the distance between the potential waypoint 204 and the target 206a. Further, the position of the potential waypoint 204 is located on circumference of the first circle 502. When the position of the potential waypoint 204 is moved, the diameter 504 of the first circle 502 varies according to the change in position of the potential waypoint 204. Further, as the potential waypoint is located at the circumference of the first circle 502, the position specifying unit 125 implements Thales' theorem in determining the position of the potential waypoint 204 that is at an angle of 90 degrees from the target 206a as explained in FIG. 5B.

FIG. 5B illustrates a user interface displaying the activation signal along with the plurality of dots arranged to form the first circle 502, in accordance with an example not falling under the claimed invention. The position specifying unit 125 calculates the distance and angle between the potential waypoint 204 and the target 206b as denoted by dotted line 404. The position specifying unit 125 also calculates the distance and angle 506 between the potential waypoint 204 and the target 206a. The activating signal is outputted by the position specifying unit 125 when the angle 506 of the potential waypoint 204 is equal to the threshold value. The threshold value is pre-set or dynamically set by the user 105. In an embodiment, when the threshold value is pre-set, the threshold value is equal to 90 degrees. The position specifying unit 125 provides the activating signal to the first bar connecting the latest waypoint 202 with the potential waypoint 204 and the second bar connecting the potential waypoint 204 with the target 206a. As shown in figure 5B, the potential waypoint 204 is perpendicular to the target 206a. Subsequently, the display 115 is configured to change one or more of color, contrast, thickness or aspect of the line connecting the potential waypoint 204 with the target 206a based on the activation signal. Further, the waypoint fix unit 121 is configured to generate a waypoint fix signal upon receiving the activating signal. The waypoint fix unit 121 is configured to add the potential waypoint 204 to the navigation route based on the waypoint fix signal. In this way, the potential waypoint 204 that is perpendicular to the target 206a in addition to being at a minimum distance from the target 206a is determined.

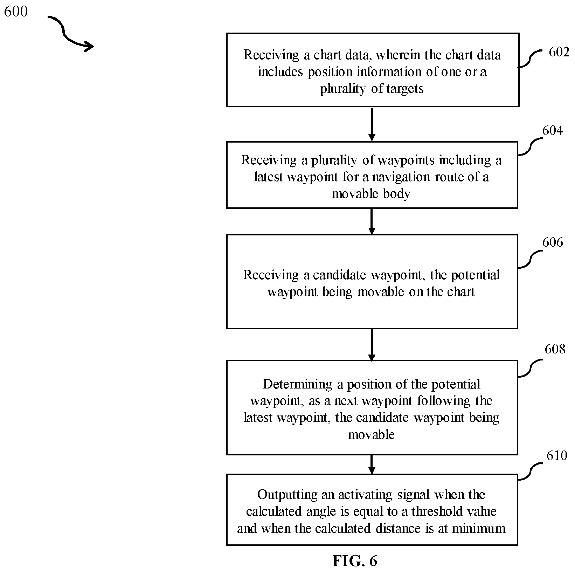

FIG. 6 is a flowchart that illustrates steps of a navigation planning method 600 executed by the navigation planning device 101, in accordance with an example not falling under the claimed invention.

At step 602, a chart data is received by the chart data receipt unit 119. The chart data includes position information of one or a plurality of targets 206a, 206b. The plurality of targets 206a, 206b are pre-loaded in the chart data. Further, the user 105 may also enter information related to the plurality of targets 206a, 206b during navigation. The chart data is stored in the database 109 and is communicatively coupled to the navigation planning device 101. In an embodiment the chart data may be stored in a memory 111 of the navigation planning device 101.

At step 604, a plurality of waypoints (103b, 103c, ..., 103f) for a navigation route of a movable body is received. The movable body is a vessel or an aircraft. The plurality of waypoints (103b, 103c, ..., 103f) includes a latest waypoint 202. The plurality of waypoints (103b, 103c, ..., 103f) are received by the waypoint receipt unit 121.

At step 606, a potential waypoint 204 is received by the potential waypoint receipt unit 123. The potential waypoint 204 is being movable on the chart. The potential waypoint 204 is moved on the chart by the user 105 by touching locations of interest in the chart.

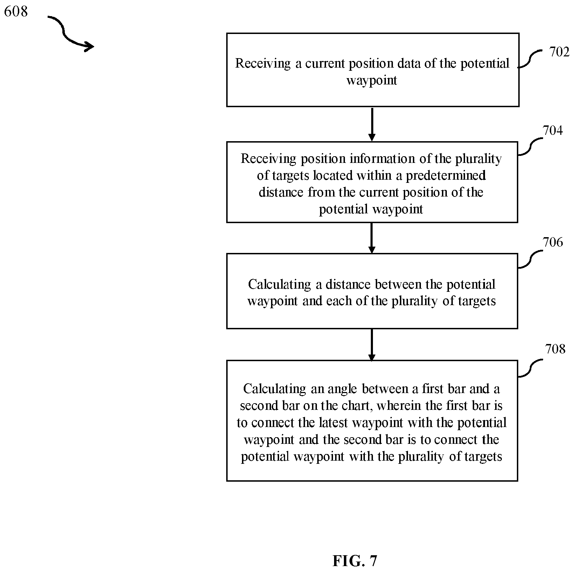

At step 608, a position of the potential waypoint 204, as a next waypoint following the latest waypoint 202 is determined by the position specifying unit 125. The determination of the position of the potential waypoint 204 is explained in FIG. 7.

At step 610, an activating signal is outputted by the position specifying unit 125 when the calculated angle is equal to a threshold value and when the calculated distance is at minimum. The activating signal ensures that the potential waypoint is added to the navigation route of the movable body such as a vessel or an aircraft.

FIG. 7 is a flowchart that illustrates steps for determining position of potential waypoint 204 executed by the position specifying unit 125, in accordance with an example not falling under the claimed invention.

At step 702, a current position data of the potential waypoint 204 is received by the position specifying unit 125 from the potential waypoint receipt unit 123.

At step 704, position information of the plurality of targets 206a, 206b located within a predetermined distance from the current position of the potential waypoint 204 is received by the position specifying unit 125 from the chart data receipt unit 119.

At step 706, a distance between the potential waypoint 204 and each of the plurality of targets 206a, 206b is calculated by the position specifying unit 125.

At step 708, an angle between a first bar 208 and a second bar 210 on the chart is calculated by the position specifying unit 125 where the first bar 208 is to connect the latest waypoint 202 with the potential waypoint 204 and the second bar 210 is to connect the potential waypoint 202 with the plurality of targets 206a, 206b. The angle between the potential waypoint 204 and the target 206a is calculated by implementing the Thales theorem.

Examples not falling under the present invention may thus provide for the navigation planning device 101 and the navigation planning method 600 that ensure accurate and easy selection of the potential waypoint 204 so as to determine the navigation route for a movable body such as a vessel or an aircraft that is optimized for safety. To that end, the navigation planning device 101 receives a chart data, wherein the chart data includes position information of one or a plurality of targets 206a, 206b. The navigation planning device 101 receives a plurality of waypoints (103b, 103c, ..., 103f) including a latest waypoint 202 for a navigation route of the movable body. Further, the navigation planning device 101 receives a potential waypoint 204, the potential waypoint 204 being movable on the chart, where the navigation planning device 101 is characterized by determining a position of the potential waypoint 204, as a next waypoint following the latest waypoint 202, the potential waypoint 204 being movable. The potential waypoint 204 is determined by receiving a current position data of the potential waypoint 204, receiving position information of the plurality of targets 206a, 206b located within a predetermined distance from the current position of the potential waypoint 204, calculating a distance between the potential waypoint 204 and each of the plurality of targets 206a, 206b, calculating an angle 506 between a first bar 208 and a second bar 210 on the chart, where the first bar 208 is to connect the latest waypoint 202 with the potential waypoint 204 and the second bar 210 is to connect the potential waypoint 204 with the plurality of targets 206a, 206b, and outputting an activating signal when the calculated angle is equal to a threshold value and when the calculated distance is at minimum.

Many modifications and other embodiments of the inventions set forth herein will come to mind of one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims.

## Claims

1. A navigation planning device (101) comprising:
a chart data receipt unit (119) configured to receive a chart data, wherein the chart data includes position information of one or a plurality of targets (206a, 206b);
a waypoint receipt unit (121) configured to receive a plurality of waypoints (103b, 103c, ..., 103f) including a latest waypoint (202) for a navigation route of a movable body;
a display panel of a user interface for displaying a navigational map with the latest waypoint and the targets;
a potential waypoint receipt unit (123) configured to receive input, by a user (105), on the display panel, of a potential waypoint (204a, 204b), wherein the users inputs the potential waypoint (204a, 204b) and moves its position on the chart by touching at specific locations or moving the cursor on the display panel, or by inputting numerical data in the navigational map;
wherein
the navigation planning device (101) is **characterized by**:
a position specifying unit (125) configured to:
- determine a position of the potential waypoint (204a, 204b) as a next waypoint following the latest waypoint (202), when the potential waypoint (204a, 204b) is moved, wherein determining of the potential waypoint (204a, 204b) is by:
calculating an angle (506) between a first bar (208) and a second bar (210) displayed on the navigational map, wherein the first bar (208) connects the latest waypoint (202) with the potential waypoint (204a, 204b) and the second bar (210) connects the potential waypoint (204a, 204b) with a target (206a, 206b); and
outputting an activating signal when the calculated angle is equal to a preset value of 90° with respect to the target (206a);
- calculate a distance between the potential waypoint (204a, 204b) and the target (206a); and
- display the calculated distance on the display in an area near the potential waypoint.

2. A navigation planning method (600), comprising
receiving a chart data, wherein the chart data includes position information of one or a plurality of targets (206a, 206b);
receiving a plurality of waypoints (103b, 103c, ..., 103f) including a latest waypoint (202) for a navigation route of a movable body;
displaying, on a display panel of a user interface, a navigational map with the latest waypoint and the targets;
receiving input, by a user (105), on the display panel, of a potential waypoint (204a, 204b), wherein the users inputs the potential waypoint (204a, 204b) and moves its position on the chart by touching at specific locations or moving the cursor on a display panel, or by inputting numerical data in the navigational map; and
wherein the navigation planning method is **characterized by**:
- determining a position of the potential waypoint (204a, 204b) as a next waypoint following the latest waypoint (202), when the potential waypoint (204a, 204b) is moved, wherein the determining is by:
calculating an angle (506) between a first bar (208) and a second bar (210) displayed on the navigational map, wherein the first bar (208) connects the latest waypoint (202) with the potential waypoint (204a, 204b) and the second bar (210) connects the potential waypoint (204a, 204b) with a target (206a, 206b); and
outputting an activating signal when the calculated angle is equal to a preset value of 90° with respect to the target (206a);
- calculating a distance between the potential waypoint (204a, 204b) and the target (206a); and
- displaying the calculated distance on the display in an area near the potential waypoint.

3. A non-transitory computer readable medium storing instructions that, when executed by one or more processors, cause a computing device to perform a method that comprises:
receiving a chart data, wherein the chart data includes position information of one or a plurality of targets (206a, 206b);
receiving a plurality of waypoints (103b, 103c, ..., 103f) including a latest waypoint (202) for a navigation route of a movable body;
displaying, on a display panel of a user interface, a navigational map with the latest waypoint and the targets;
receiving input, by a user (105), on the display panel, of a potential waypoint (204a, 204b), wherein the users inputs the potential waypoint and moves its position on the chart by touching at specific locations or moving the cursor on a display panel, or by inputting numerical data in the navigational map; and
wherein the computing device to perform the method (600) is **characterized by**:
- determining a position of the potential waypoint (204a, 204b) as a next waypoint following the latest waypoint (202), when the potential waypoint (204a, 204b) is moved, wherein the determining is by:
calculating an angle (506) between a first bar (208) and a second bar (210) displayed on the navigational map, wherein the first bar (208) connects the latest waypoint (202) with the potential waypoint (204a, 204b) and the second bar (210) connects the potential waypoint (204a, 204b) with a target (206a, 206b); and
outputting an activating signal when the calculated angle is equal to a preset value of 90° with respect to the target 2. (206a);
- calculating a distance between the potential waypoint (204a, 204b) and the target (206a); and
- displaying the calculated distance on the display in an area near the potential waypoint.

## Patentansprüche

1. Navigationsplanungsvorrichtung (101), aufweisend:
eine Kartendatenempfangseinheit (119), die konfiguriert ist, Kartendaten zu empfangen, wobei die Kartendaten Positionsinformationen eines oder mehrerer Ziele (206a, 206b) enthalten;
eine Wegpunktempfangseinheit (121), die konfiguriert ist, mehrere Wegpunkte (103b, 103c, ..., 103f) zu empfangen, die einen neuesten Wegpunkt (202) für eine Navigationsroute eines beweglichen Körpers enthalten;
ein Anzeigefeld einer Benutzerschnittstelle zum Anzeigen einer Navigationskarte mit dem neuesten Wegpunkt und den Zielen;
eine Einheit (123) zum Empfangen potenzieller Wegpunkte, die konfiguriert ist, Eingaben eines potenziellen Wegpunkts (204a, 204b) durch einen Benutzer (105) auf dem Anzeigefeld zu empfangen, wobei der Benutzer den potenziellen Wegpunkt (204a, 204b) eingibt und seine Position auf der Karte durch Berühren an bestimmten Stellen oder Bewegen des Cursors auf dem Anzeigefeld oder durch Eingeben numerischer Daten in die Navigationskarte bewegt;
wobei
die Navigationsplanungsvorrichtung (101) **gekennzeichnet ist durch**:
eine Positionsspezifizierungseinheit (125), die konfiguriert ist, um:
- eine Position des potenziellen Wegpunkts (204a, 204b) als einen nächsten Wegpunkt zu bestimmen, der dem neuesten Wegpunkt (202) folgt, wenn der potenzielle Wegpunkt (204a, 204b) bewegt wird, wobei das Bestimmen des potenziellen Wegpunkts (204a, 204b) erfolgt **durch**:
Berechnen eines Winkels (506) zwischen einem ersten Balken (208) und einem zweiten Balken (210), die auf der Navigationskarte angezeigt werden, wobei der erste Balken (208) den neuesten Wegpunkt (202) mit dem potenziellen Wegpunkt (204a, 204b) verbindet und der zweite Balken (210) den potenziellen Wegpunkt (204a, 204b) mit einem Ziel (206a, 206b) verbindet; und
Ausgeben eines Aktivierungssignals, wenn der berechnete Winkel gleich einem voreingestellten Wert von 90° in Bezug auf das Ziel (206a) ist;
- einen Abstand zwischen dem potenziellen Wegpunkt (204a, 204b) und dem Ziel (206a) zu berechnen; und um
- den berechneten Abstand auf der Anzeige in einem Bereich in der Nähe des potenziellen Wegpunkts anzuzeigen.

2. Navigationsplanungsverfahren (600), aufweisend
Empfangen von Kartendaten, wobei die Kartendaten Positionsinformationen eines oder mehrerer Ziele (206a, 206b) enthalten;
Empfangen mehrerer Wegpunkte (103b, 103c, ..., 103f), die einen neuesten Wegpunkt (202) für eine Navigationsroute eines beweglichen Körpers enthalten;
Anzeigen einer Navigationskarte mit dem neuesten Wegpunkt und den Zielen auf einem Anzeigefeld einer Benutzerschnittstelle;
Empfangen einer Eingabe eines potenziellen Wegpunkts (204a, 204b) durch einen Benutzer (105) auf dem Anzeigefeld, wobei der Benutzer den potenziellen Wegpunkt (204a, 204b) eingibt und seine Position auf der Karte durch Berühren an bestimmten Stellen oder Bewegen des Cursors auf einem Anzeigefeld oder durch Eingeben numerischer Daten in die Navigationskarte bewegt; und
wobei das Navigationsplanungsverfahren **gekennzeichnet ist durch**:
- Bestimmen einer Position des potenziellen Wegpunkts (204a, 204b) als einen nächsten Wegpunkt, der dem neuesten Wegpunkt (202) folgt, wenn der potenzielle Wegpunkt (204a, 204b) bewegt wird, wobei das Bestimmen erfolgt **durch**:
Berechnen eines Winkels (506) zwischen einem ersten Balken (208) und einem zweiten Balken (210), die auf der Navigationskarte angezeigt werden, wobei der erste Balken (208) den neuesten Wegpunkt (202) mit dem potenziellen Wegpunkt (204a, 204b) verbindet und der zweite Balken (210) den potenziellen Wegpunkt (204a, 204b) mit einem Ziel (206a, 206b) verbindet; und
Ausgeben eines Aktivierungssignals, wenn der berechnete Winkel gleich einem voreingestellten Wert von 90° in Bezug auf das Ziel (206a) ist;
- einen Abstand zwischen dem potenziellen Wegpunkt (204a, 204b) und dem Ziel (206a) zu berechnen; und um
- den berechneten Abstand auf der Anzeige in einem Bereich in der Nähe des potenziellen Wegpunkts anzuzeigen.

3. Nicht-transitorisches computerlesbares Medium, das Anweisungen speichert, die, wenn sie von einem oder mehreren Prozessoren ausgeführt werden, eine Rechenvorrichtung veranlassen, ein Verfahren durchzuführen, das aufweist:
Empfangen von Kartendaten, wobei die Kartendaten Positionsinformationen eines oder mehrerer Ziele (206a, 206b) enthalten;
Empfangen mehrerer Wegpunkte (103b, 103c, ..., 103f), die einen neuesten Wegpunkt (202) für eine Navigationsroute eines beweglichen Körpers enthalten;
Anzeigen einer Navigationskarte mit dem neuesten Wegpunkt und den Zielen auf einem Anzeigefeld einer Benutzerschnittstelle;
Empfangen einer Eingabe eines potenziellen Wegpunkts (204a, 204b) durch einen Benutzer (105) auf dem Anzeigefeld, wobei der Benutzer den potenziellen Wegpunkt eingibt und seine Position auf der Karte durch Berühren an bestimmten Stellen oder Bewegen des Cursors auf einem Anzeigefeld oder durch Eingeben numerischer Daten in die Navigationskarte bewegt; und
wobei die Rechenvorrichtung zum Durchführen des Verfahrens (600) **gekennzeichnet ist durch**:
- Bestimmen einer Position des potenziellen Wegpunkts (204a, 204b) als einen nächsten Wegpunkt, der dem neuesten Wegpunkt (202) folgt, wenn der potenzielle Wegpunkt (204a, 204b) bewegt wird, wobei das Bestimmen erfolgt **durch**:
Berechnen eines Winkels (506) zwischen einem ersten Balken (208) und einem zweiten Balken (210), die auf der Navigationskarte angezeigt werden, wobei der erste Balken (208) den neuesten Wegpunkt (202) mit dem potenziellen Wegpunkt (204a, 204b) verbindet und der zweite Balken (210) den potenziellen Wegpunkt (204a, 204b) mit einem Ziel (206a, 206b) verbindet; und
Ausgeben eines Aktivierungssignals, wenn der berechnete Winkel gleich einem voreingestellten Wert von 90° in Bezug auf das Ziel (206a) ist;
- einen Abstand zwischen dem potenziellen Wegpunkt (204a, 204b) und dem Ziel (206a) zu berechnen; und um
- den berechneten Abstand auf der Anzeige in einem Bereich in der Nähe des potenziellen Wegpunkts anzuzeigen.

## Revendications

1. Dispositif de planification de navigation (101) comprenant :
une unité de réception de données graphiques (119) configurée pour recevoir des données graphiques, dans lequel les données graphiques comprennent des informations de position d'une ou d'une pluralité de cibles (206a, 206b) ;
une unité de réception de point de passage (121) configuré pour recevoir une pluralité de points de passage (103b, 103c, ..., 103f) comprenant un point de passage le plus récent (202) pour un itinéraire de navigation d'un corps mobile :
un panneau d'affichage d'une interface utilisateur pour afficher une carte de navigation avec le point de passage le plus récent et les cibles ;
une unité de réception de point de passage potentiel (123) configurée pour recevoir une entrée, par un utilisateur (105), sur le panneau d'affichage, d'un point de passage potentiel (204a, 204b), dans lequel l'utilisateur entre le point de passage potentiel (204a, 204b) et déplace sa position sur le graphique en touchant des emplacements spécifiques ou en déplaçant le curseur sur le panneau d'affichage, ou en entrant des données numériques dans la carte de navigation ;
dans lequel
le dispositif de planification de navigation (101) est **caractérisé par** :
une unité de spécification de position (125) configurée pour :
- déterminer une position du point de passage potentiel (204a, 204b) en tant qu'un point de passage suivant à la suite du point de passage le plus récent (202), lorsque le point de passage potentiel (204a, 204b) est déplacé, dans lequel la détermination du point de passage potentiel (204a, 204b) est réalisée par :
le calcul d'un angle (506) entre une première barre (208) et une seconde barre (210) affichée sur la carte de navigation, dans lequel la première barre (208) relie le point de passage le plus récent (202) au point de passage potentiel (204a, 204b) et la seconde barre (210) relie le point de passage potentiel (204a, 204b) à une cible (206a, 206b) ; et
la délivrance d'un signal d'activation lorsque l'angle calculé est égal à une valeur prédéfinie de 90° par rapport à la cible (206a) ;
- calculer une distance entre le point de passage potentiel (204a, 204b) et la cible (206a) ; et
- afficher la distance calculée sur le panneau d'affichage dans une zone proche du point de passage potentiel.

2. Procédé de planification de navigation (600), comprenant
la réception de données graphiques, dans lequel les données graphiques comprennent des informations de position d'une ou d'une pluralité de cibles (206a, 206b) ;
la réception d'une pluralité de points de passage (103b, 103c, ..., 103f) comprenant un point de passage le plus récent (202) pour un itinéraire de navigation d'un corps mobile :
l'affichage, sur un panneau d'affichage d'une interface utilisateur, d'une carte de navigation avec le point de passage le plus récent et les cibles ;
la réception, par un utilisateur (105), sur le panneau d'affichage, d'un point de passage potentiel (204a, 204b), dans lequel l'utilisateur entre le point de passage potentiel (204a, 204b) et déplace sa position sur le graphique en touchant des emplacements spécifiques ou en déplaçant le curseur sur un panneau d'affichage, ou en entrant des données numériques dans la carte de navigation ; et
dans lequel le procédé de planification de navigation est **caractérisé par** :
- la détermination d'une position du point de passage potentiel (204a, 204b) en tant qu'un point de passage suivant à la suite du point de passage le plus récent (202), lorsque le point de passage potentiel (204a, 204b) est déplacé, dans lequel la détermination est réalisée par :
le calcul d'un angle (506) entre une première barre (208) et une seconde barre (210) affichée sur la carte de navigation, dans lequel la première barre (208) relie le point de passage le plus récent (202) au point de passage potentiel (204a, 204b) et la seconde barre (210) relie le point de passage potentiel (204a, 204b) à une cible (206a, 206b) ; et
la délivrance d'un signal d'activation lorsque l'angle calculé est égal à une valeur prédéfinie de 90° par rapport à la cible (206a) ;
- le calcul d'une distance entre le point de passage potentiel (204a, 204b) et la cible (206a) ; et
- l'affichage de la distance calculée sur le panneau d'affichage dans une zone proche du point de passage potentiel

3. Support non transitoire lisible par ordinateur stockant des instructions qui, lorsqu'elles sont exécutées par un ou plusieurs processeurs, amènent un dispositif informatique à réaliser un procédé qui comprend :
la réception de données graphiques, dans lequel les données graphiques comprennent des informations de position d'une ou d'une pluralité de cibles (206a, 206b) ;
la réception d'une pluralité de points de passage (103b, 103c, ..., 103f) comprenant un point de passage le plus récent (202) pour un itinéraire de navigation d'un corps mobile :
l'affichage, sur un panneau d'affichage d'une interface utilisateur, d'une carte de navigation avec le point de passage le plus récent et les cibles ;
la réception, par un utilisateur (105), sur le panneau d'affichage, d'un point de passage potentiel (204a, 204b), dans lequel l'utilisateur entre le point de passage potentiel et déplace sa position sur le graphique en touchant des emplacements spécifiques ou en déplaçant le curseur sur un panneau d'affichage, ou en entrant des données numériques dans la carte de navigation ; et
dans lequel le dispositif informatique destiné à réaliser le procédé (600) est **caractérisé par** :
- la détermination d'une position du point de passage potentiel (204a, 204b) en tant qu'un point de passage suivant à la suite du point de passage le plus récent (202), lorsque le point de passage potentiel (204a, 204b) est déplacé, dans lequel la détermination est réalisée par :
le calcul d'un angle (506) entre une première barre (208) et une seconde barre (210) affichée sur la carte de navigation, dans lequel la première barre (208) relie le point de passage le plus récent (202) au point de passage potentiel (204a, 204b) et la seconde barre (210) relie le point de passage potentiel (204a, 204b) à une cible (206a, 206b) ; et
la délivrance d'un signal d'activation lorsque l'angle calculé est égal à une valeur prédéfinie de 90° par rapport à la cible (206a) ;
- le calcul d'une distance entre le point de passage potentiel (204a, 204b)et la cible (206a) ; et
- l'affichage de la distance calculée sur le panneau d'affichage dans une zone proche du point de passage potentiel.
